# EUROPÄISCHE PATENTSCHRIFT

(11) **EP 1 322 880 B1**
(45) Veröffentlichungstag und Bekanntmachung des Hinweises auf die Patenterteilung: **01.12.2004**
(21) Anmeldenummer: 01985287.0
(22) Anmeldetag: 18.09.2001
(51) Int. Cl.: F16K 31/06

(54) **ELEKTROMAGNETISCH BETÄTIGBARE VENTILEINRICHTUNG UND VENTILVORRICHTUNG**
ELECTROMAGNETICALLY ACTUATABLE VALVE SYSTEM AND VALVE DEVICE
SYSTEME DE SOUPAPES A COMMANDE ELECTROMAGNETIQUE ET DISPOSITIF A SOUPAPES

(30) Priorität: 22.09.2000 DE 10046977
(43) Veröffentlichungstag der Anmeldung: 02.07.2003
(73) Patentinhaber: KNORR-BREMSE SYSTEME FÜR NUTZFAHRZEUGE GMBH, 80809 München (DE)
(72) Erfinder: STUMPE, Werner, 70378 Stuttgart (DE)
(86) Internationale Anmeldenummer: PCT/EP2001/010774
(87) Internationale Veröffentlichungsnummer: WO 2002/025153

(56) Entgegenhaltungen:
- WO-A-90/01651
- US-A- 4 450 863
- US-A- 4 623 118
- US-A- 4 936 337
- US-A- 5 039 069
- US-A- 6 073 652

## Beschreibung

Die Erfindung betrifft eine elektromagnetisch betätigbare Ventileinrichtung, im einzelnen mit den Merkmalen aus dem Oberbegriff des Anspruches 1; ferner eine kombinierte Ventilvorrichtung.

Eine elektromagnetisch betätigbare Ventileinrichtung zur Gewährleistung unterschiedlicher Funktionen ist aus der Druckschrift EP 0 305 710 A2 bekannt. Die Kombination derartiger Ventileinrichtungen - einer ersten elektromagnetisch betätigbaren Ventileinrichtung und einer zweiten elektromagnetisch betätigbaren Ventileinrichtung - zu einer kombinierten Ventilvorrichtung ist ebenfalls dieser Druckschrift zu entnehmen. Beide sind in diesem Fall in einem gemeinsam nutzbaren Gehäuse integriert. Die erste elektromagnetisch betätigbare Ventileinrichtung dient dabei der Steuerung der Verbindung zwischen einer Druckmittelquelle und einem Verbraucher oder einer Verbraucheranlage, d.h. einer Mehrzahl von Verbrauchern, während die zweite Ventileinrichtung zur Steuerung der Druckentlastung des Verbrauchers oder der Verbraucheranlage eingesetzt wird. Beide Ventileinrichtungen der kombinierten Ventileinrichtung sind vorzugsweise identisch aufgebaut, um ein hohes Maß an Standardisierung hinsichtlich der Ausgestaltung der Einzelelemente zu erzielen. Die erste Ventileinrichtung weist eine mit der Druckmittelquelle über einen entsprechenden Anschluß verbindbare Einlaßkammer und eine mit einem Verbraucher beziehungsweise einer Verbraucheranlage verbindbare Arbeitskammer auf, wobei zwischen beiden Kammern ein Hauptventil angeordnet ist. Dieses besteht aus einem beweglichen Hauptventilglied und einem gehäusefesten Ventilsitz. Im Gehäuse der ersten Ventileinrichtung sind ferner neben der Einlaßkammer und der Arbeitskammer eine Vorsteuerkammer und eine Ausgleichskammer vorgesehen. Zur Steuerung der Bewegung des Hauptventilgliedes ist ein Stellglied vorgesehen. Das Stellglied ist derart ausgeführt, daß es auf einer ersten, der Einlaßkammer zugeordneten Fläche in Öffnungsrichtung des Hauptventils vom Einlaßdruck beaufschlagt wird, während an einer zweiten, der Vorsteuerkammer zugeordneten Fläche des Stellgliedes in Schließrichtung des Hauptventils der Druck in der Vorsteuerkammer anliegt. Dabei ist die zweite Fläche größer als die erste Fläche. Die Vorsteuerkammer ist über ein Vorsteuerventil mit der Arbeitskammer verbindbar. Das Vorsteuerventil wird dabei von einem beweglichen Vorsteuerventilglied und einem mit dem Anker des Betätigungsmagneten verbundenen Vorsteuerventilkörpers gebildet. Das Hauptventilglied und das Vorsteuerventilglied sind derart fest gekoppelt, daß eine Bewegung des Hauptventilgliedes in Öffnungsrichtung des Hauptventiles zugleich eine Bewegung des Vorsteuerventilgliedes in Schließrichtung des Vorsteuerventils ist Die Vorsteuerkammer ist über eine Drosselverbindung mit der Einlaßkammer verbunden. Die Drosselverbindung ist so bemessen, daß diese bei geringem Öffnungsquerschnitt des Vorsteuerventils einen wenigstens gleich großen Druckmitteldurchsatz in die Vorsteuerkammer wie das Vorsteuerventil aus der Vorsteuerkammer und bei zunehmendem Öffnungsquerschnitt des Vorsteuerventiles einen geringeren Druckmitteldurchsatz in die Vorsteuerkammer als das Vorsteuerventil aus der Vorsteuerkammer zuläßt. Die zweite Ventileinrichtung, welche vorzugsweise analog zur ersten Ventileinrichtung hinsichtlich des Stellglieds, der Betätigungseinrichtung und der Funktionsweise von Haupt- und Vorsteuerventil aufgebaut ist, weist eine mit der Verbraucheranlage verbundene Arbeitskammer auf, welche bei der kombinierten Ventileinrichtung gleichzeitig die Arbeitskammer der ersten Ventileinrichtung darstellt und eine mit einem Auslaß verbundene Auslaßkammer, zwischen denen ein aus einem gehäusefesten Ventilsitz und einem beweglichen Hauptventilglied bestehendes Hauptventil angeordnet ist, wobei der Auslaß wenigstens mittelbar mit einem Druckentlastungsraum verbunden ist. Desweiteren ist in Analogie zur ersten Ventileinrichtung eine die Bewegung des Hauptventils steuernde Stelleinrichtung und eine Vorsteuerkammer vorgesehen. Das Stellglied wird auf einer ersten, der Arbeitskammer zugeordneten Fläche in Öffnungsrichtung des Hauptventils vom Verbraucherdruck beaufschlagt. Auf einer zweiten der Vorsteuerkammer zugeordneten Fläche wird das Stellglied in Schließrichtung des Hauptventils vom Druck in der Vorsteuerkammer beaufschlagt. Die zweite Fläche ist dabei ebenfalls größer als die erste Fläche. Die Vorsteuerkammer ist über ein Vorsteuerventil mit der Auslaßkammer verbindbar. Das Vorsteuerventil wird von einem beweglichen Vorsteuerventilglied und einem mit dem Anker des Betätigungsmagneten verbundenen Vorsteuerventilkörpers gebildet. Hauptventilglied und Vorsteuerventilglied sind dabei derart fest gekoppelt, daß eine Bewegung des Hauptventilgliedes in Öffnungsrichtung des Hauptventils zugleich eine Bewegung des Vorsteuerventilgliedes in Schließrichtung des Vorsteuerventils ist. Die Vorsteuerkammer ist über eine weitere Drosselverbindung mit der Auslaßd.h. in diesem Fall der Entlastungskammer verbunden. Die Drosselverbindung ist dabei derart bemessen, daß sie bei geringem Öffnungsquerschnitt des Vorsteuerventiles einen wenigstens gleich großen Druckmitteldurchsatz in die Vorsteuerkammer wie das Vorsteuerventil aus der Vorsteuerkammer und bei zunehmendem Öffnungsquerschnitt des Vorsteuerventils einen geringeren Druckmitteldurchsatz in die Vorsteuerkammer als das Vorsteuerventil aus der Vorsteuerkammer zuläßt. Bei beiden Ventileinrichtungen ist das Stellglied auf einer dritten, der Auslaßkammer zugeordneten Fläche vom Druck in der Auslaßkammer beaufschlagt. Die dritte Fläche ist dabei am Stellglied derart angeordnet, daß der auf ihr lastende Druck das Stellglied in Schließrichtung des Hauptventiles beaufschlagt. Des weiteren ist eine mit der Auslaßkammer verbundene Ausgleichskammer vorgesehen, der eine vierte Fläche des Stellgliedes zugeordnet ist, auf welcher das Stellglied vom Druck in der Ausgleichskammer in Öffnungsrichtung des Hauptventils beaufschlagt wird.

Die in dieser Druckschrift offenbarten Ventileinrichtungen sind konstruktiv sehr aufwendig und montageintensiv. Diese beinhalten eine Stelleinrichtung mit Ventil und Schaltkolben an den Enden. Der dünnere Teil der Stelleinrichtung wird dabei durch eine Trennwand geführt. Zur Sicherstellung der Kraftübertragung sind die einzelnen Einzelteile miteinander vernietet. Der Aufbau der Stelleinrichtung vergrößert den erforderlichen Bauraum für die einzelne Ventileinrichtung. Des weiteren ist es nicht möglich, eine Überprüfung der Ventilsitze ohne Zerstörung der einzelnen Ventileinrichtungen beziehungsweise der kombinierten Ventilvorrichtung vorzunehmen. Auch der Ersatz des elastischen Ventilsitzteiles des Hauptventils bedingt einen hohen Aufwand. Bei Reparaturen oder einer Wartung sind dabei Beschädigungen an anderen - ursprünglich nicht betroffenen - Teilen nicht auszuschließen. Eine Instandsetzung dieser Ventileinrichtung ist somit mit Risiken behaftet, weshalb sich bei Schädigungen - unabhängig welchen Grades - immer ein Austausch der kompletten Ventileinrichtung oder sogar der gesamten Ventilvorrichtung empfiehlt.

Eine gattungsgemäße kombinierte Ventilvorrichtung entsprechend den Merkmalen des Oberbegriffes von Anspruch 1 ist aus der Druckschrift US-PS 46 23 118 vorbekannt. Diese baut relativ groß. Ferner werden auch hier die einzelnen Ventilsitze und Zwischenwände zwischen den Ventilen zum Teil vom Gehäuse gebildet. Es ergeben sich damit die gleichen Probleme bezüglich der Wartung und Instandsetzung, wie bereits für die Ausführung gemäß EP 0 305 710 A2 beschrieben.

Eine andere kombinierte Ventilvorrichtung, bei der der ortsfeste Sitz jedes. Hauptventils von einem in das Gehäuse der Ventileinrichtung einspannbaren Einsatz gebildet wird und die Vorsteuerkammer von einem zwischen der baulichen Einheit und dem Einsatz vorhandenen Zwischenraum und die Zwischenwand zwischen beiden Ventileinrichtungen von der Gehäuseinnenwand gebildet wird, und bei der die gleichen Probleme bei der Wartung und Instandsetzung auftreten, ist aus der US 6,073,652 vorbekannt.

Der Erfindung liegt daher die Aufgabe zugrunde, eine Ventileinrichtung und insbesondere eine kombinierte Ventilvorrichtung zur Steuerung der Verbindung zwischen einer Druckmittelquelle und einer Verbraucheranlage sowie zur Steuerung der Druckentlastung der Verbraucheranlage zu schaffen, welche montage- und wartungs- beziehungsweise reparaturfreundlich ist. Das erforderliche Bauvolumen ist bei gleichbleibenden oder erhöhten Fluidinsbesondere Luftdurchsatz zu reduzieren. Ein weiterer Aspekt besteht in der einfachen Fertigung der Einzelelemente der einzelnen Ventileinrichtungen und insbesondere der kombinierten Ventilvorrichtung. Die Anforderungen an die Reparaturfreundlichkeit schließt eine mögliche Überprüfbarkeit der Güte von Ventilpaarungen ein, so daß bei gutem Befund eine Weiterverwendung der bereits in Betrieb befindlichen Ventilpaarungen möglich sein sollte. Bei einem erforderlichen

Austausch sollten dann nur die defekten Teile zu ersetzen sein, während die nicht beschädigten Einzelelemente weiterhin im Einsatz bleiben.

Die erfindungsgemäße Lösung ist durch Anspruch 1 charakterisiert. Vorteilhafte Ausgestaltungen sind jeweils in den Unteransprüchen wiedergegeben.

Die elektromagnetisch betätigbare Ventileinrichtung umfaßt eine elektromagnetische Betätigungsvorrichtung, ein, zwischen einer Einlaßkammer und einer Auslaßkammer angeordnetes ein Hauptventilglied und einen ortsfesten Ventilsitz aufweisendes Hauptventil, des weiteren eine Vorsteuerkammer, welche über ein Vorsteuerventil mit der Auslaßkammer verbunden ist. Das Vorsteuerventil umfaßt ein Vorsteuerventilglied und einen Vorsteuerventilkörper, welcher mit einem Betätigungsmagneten gekoppelten Anker der elektromagnetischen Betätigungsvorrichtung verbunden ist. Das Hauptventilglied und das Vorsteuerventilglied sind derart miteinander gekoppelt, daß eine Bewegung des Hauptventilgliedes in Öffnungsrichtung des Hauptventils zugleich eine Bewegung des Vorsteuerventilgliedes in Schließrichtung des Vorsteuerventils ist. Zu diesem Zweck sind das Hauptventilglied und das Vorsteuerventilglied zu einer baulichen Einheit zusammengefaßt, welche auch als Schließkörper bezeichnet wird. Erfindungsgemäß wird der ortsfeste Sitz für das Hauptventilglied von einem im Gehäuse der elektromagnetisch betätigbaren Ventileinrichtung anordenbaren Einsatz gebildet. Der Schließkörper bildet mittels einer entsprechenden Dichteinrichtung mit dem Gehäuse beziehungsweise dem Einsatz die Vorsteuerkammer, wobei die Vorsteuerkammer derart angeordnet ist, daß der Druck in dieser das Hauptventilglied auf der, von der Einlaßkammer weggerichteten Stirnfläche beaufschlagt. Die Kopplung zwischen der Einlaßkammer und der Vorsteuerkammer erfolgt über mindestens einen vorzugsweise axialen Kanal, welcher sich durch den Schließkörper erstreckt. Die Verbindung zwischen Vorsteuerventil und Auslaßkammer erfolgt über mindestens einen weiteren, im Schließkörper angeordneten Verbindungskanal.

Durch das Vorsehen des Einsatzes, der Zusammenfassung von Hauptventilglied und Vorsteuerventilglied in einer baulichen Einheit und der Zuordnung der Vorsteuerkammer zum Schließkörper wird eine einfach montier- und demontierbare Ventileinrichtung geschaffen, die gleichzeitig sehr wartungs- und reparaturfreundlich ist, wobei bei der Demontage keinerlei Beschädigungen benachbarter Bauelemente erzeugt werden. Da die Ausbildung der Ventilpaarungen an unterschiedlichen Elementen erfolgt, ist ein Austausch der defekten Bestandteile unabhängig von der weiteren Nutzung der anderen Ventilpaarungen möglich. Durch die sehr gedrängte Bauweise und Zusammenfassung der Funktionseinheiten auf sehr engem Raum konnte das benötigte Bauvolumen bei gleichbleibenden oder erhöhten Fluid- insbesondere Luftdurchsatz erheblich reduziert werden.

Die erfindungsgemäß gestaltete elektromagnetisch betätigbare Ventileinrichtung ist zur Realisierung unterschiedlichster Aufgaben geeignet. Dieses ist entsprechend der Anordnung in pneumatischen Kreisläufen oder der Zuordnung zu einzelnen Elementen eines derartigen Kreislaufes entweder als
1) Steuerventil zur Steuerung der Verbindung zwischen einer Druckmittelquelle und einer nicht dargestellten Verbraucheranlage oder
2) Druckentlastungsventil zur Steuerung der Druckentlastung eines Verbrauchers oder mehrerer Verbraucher einsetzbar.

Im erstgenannten Fall ist die Einlaßkammer mit einer Druckmittelquelle koppelbar, während die Auslaßkammer als Arbeitskammer fungiert und mit einem Verbraucher gekoppelt ist. Im zweiten Fall wird die Einlaßkammer von der Arbeitskammer gebildet, die mit einem Verbraucher gekoppelt ist, während der Auslaß mit einem Entlastungsraum verbindbar ist.

Unter einem weiteren Aspekt der Erfindung ist es jedoch auch möglich eine erfindungsgemäß gestaltete Ventileinrichtung derart einer beliebigen konventionellen Ventileinrichtung zuzuordnen, daß entweder die unter 1) genannte Aufgabe oder die unter 2) genannte Aufgabe von der Ventileinrichtung übernommen wird.

Vorzugsweise werden beide Ventileinrichtungen in einer kombinierten Ventilvorrichtung zur Erfüllung der beiden vorgenannten Aufgaben zusammengefaßt. In diesem Fall erfolgt der Aufbau und die Auslegung der Einzelelemente der Haupt- und Vorsteuerventile vorzugsweise identisch. Dies bietet den Vorteil, daß ein hoher Grad an einheitlichen Teilelementen erzielt wird, was insbesondere auch bei erforderlichem Austausch einzelner Elemente von Vorteil ist, da die Lagerhaltung für unterschiedliche Bauelemente erheblich reduziert wird. Zu diesem Zweck sind zwei erfindungsgemäß gestaltete elektromagnetisch betätigbare Ventileinrichtungen in einem Gehäuse zusammengefaßt, welches drei Anschlüsse - einen Zulauf, welcher mit einer Druckmittelquelle koppelbar ist, einen Ablauf, welcher mit einem Verbraucher wenigstens mittelbar gekoppelt ist und einen Entlastungsanschluß, welcher wenigstens mittelbar mit einem Entlastungsraum verbunden ist - aufweist. In diesem Fall wird der Ablauf der ersten Ventileinrichtung und der Zulauf zur zweiten Ventileinrichtung von einem gemeinsamen Anschluß zum Verbraucher gebildet, das heißt ein Anschluß wird gemeinsam benutzt. Diese kombinierte Ventilvorrichtung dient zum einen der Steuerung der Verbindung zwischen dem Zulauf von der Druckmittelquelle zum Verbraucher und des weiteren der Steuerung der Druckentlastung in der mit dem Verbraucher gekoppelten Arbeitskammer. Beide Ventileinrichtungen sind hinsichtlich der Betätigungseinrichtung und dem Schließkörper vorzugsweise identisch aufgebaut. Bezüglich der Einsätze im gemeinsamen Gehäuse bestehen jedoch Unterschiede, da die Begrenzung zwischen beiden Ventileinrichtungen nicht von der Gehäusewand sondern von den Einsätzen beziehungsweise einem der Einsätze gebildet wird.

Der Schließkörper einer Ventileinrichtung ist beispielsweise als Kolbenelement ausgeführt, welcher zur Bildung des Hauptventils einen kolbenartig erweiterten Endbereich aufweist, der entsprechend der Ventileinrichtung - erster Ventileinrichtung oder zweiter Ventileinrichtung - entweder vom Druck in der Einlaßkammer oder vom Druck in der Arbeitskammer an dessen zu den jeweiligen Kammern gerichteten Stimflächen beaufschlagt wird. Die Verbindung zwischen der Einlaßkammer und dem Vorsteuerventil erfolgt über einen sich in axialer Richtung durch den Schließkörper erstreckenden Kanal und die Vorsteuerkammer. Dieser Kanal dient somit der Bildung einer Konstantdrossel im Eintrittsbereich in den axialen Kanal am Schließkörper und durch die entsprechende Betätigung des Vorsteuerventilkörpers, welcher mit einem Ankerelement der elektromagnetischen Betätigungsvorrichtung gekoppelt ist, der Bildung einer steuerbaren Drossel, welche der Konstantdrossel nachgeschaltet ist.

Beide Ventileinrichtungen - erste Ventileinrichtung und zweite Ventileinrichtung - weisen eine elektromagnetische Betätigungsvorrichtung auf, welche vorzugsweise ebenfalls identisch ausgebildet ist Diese umfaßt mindestens einen Betätigungsmagneten, welcher mit einem Anker verbunden ist. Der Anker wiederum ist wenigstens mittelbar, vorzugsweise direkt mit dem Ventilkörper der Vorsteuerventileinrichtung verbunden. Bezüglich der Wirkungsweise und damit der Erzielung der einzelnen Funktionsstellungen der Vorsteuerventileinrichtung einer jeden Ventileinrichtung bestehen im wesentlichen die beiden nachfolgend genannten Möglichkeiten:
1. Auswahl eines Betätigungsmagneten mit einer ansteigenden Hub/Stromcharakteristik, das heißt der Ventilkörper wird in die entsprechende Funktionsstellung gezogen.
2. Ausbildung des Betätigungsmagneten mit einer abfallenden Hub/Stromcharakteristik, das heißt Realisierung der Funktionsstellungen des Ventilkörpers durch Druck.

Die Betätigungsmagnete können dabei beispielsweise als Proportionalmagnete oder getaktete Magnete ausgeführt sein. Bei Zusammenfassung der beiden Ventileinrichtungen in einer kombinierten Ventilvorrichtung werden vorzugsweise beide Ventileinrichtungen mit identischer Betätigungseinrichtung verwendet, so daß die zur Realisierung der Funktionsweise der kombinierten Ventileinrichtung erforderlichen Stellungen entweder durch Bestromung oder Nichtbestromung eines einzelnen Ankerelementes realisiert werden. Die Ausnutzung dieser Möglichkeit bietet den Vorteil, daß der Grad der Standardisierung für die Ausgestaltung derartiger Ventileinrichtungen für unterschiedliche Anwendungszwecke und Verwendung in Kombination in einer kombinierten Ventilvorrichtung erheblich gesteigert werden kann. Dies bietet des weiteren den Vorteil, daß bei einem eventuell erforderlichen Austausch, insbesondere bei kombinierten Ventileinrichtungen, nicht auf unterschiedliche Betätigungsvorrichtungen geachtet werden muß.

Die konkrete Ausgestaltung der Einzelelemente der einzelnen Ventileinrichtungen kann unterschiedlich erfolgen. Vorzugsweise erfolgt jedoch zumindest die Ausgestaltung des Schließkörpers symmetrisch bezüglich einer Achse, insbesondere einer in axialer Richtung ausgerichteten Achse. Der Schließkörper ist beispielsweise als Kolbenelement, das heißt als Element mit unterschiedlichen Abmessungen im Querschnitt betrachtet ausgeführt. Im Schließkörper ist mindestens ein Verbindungskanal zwischen Einlaßkammer und Vorsteuerkammer vorgesehen. Dieser erstreckt sich von der zur Einlaßkammer gerichteten Stirnfläche des Hauptventilgliedes bis in den Endbereich des Schließkörpers.

Zur Bildung der Vorsteuerkammer ist zwischen dem Schließkörper und dem Gehäuse beziehungsweise einem Einsatz im Gehäuse eine Dichteinrichtung vorgesehen, welche zwischen die genannten Elemente gespannt wird. Diese Dichteinrichtung umfaßt im einfachsten Fall einen O-Ring. Andere berührende Dichtungen sind ebenfalls denkbar.

Vorzugsweise sind zwischen dem Hautpventilsitz und dem mit diesen in Wirkverbindung tretenden Flächen am Hauptventilglied ebenfalls Dichteinrichtungen vorgesehen. Diese können entweder am ortsfesten Ventilsitz oder am Schließkörper angeordnet sein. Vorzugsweise erfolgt die Anordnung am Schließkörper.

Bezüglich der Ausführung der Einsätze bestehen eine Mehrzahl von Möglichkeiten. Diese sind bei Ausführung als Einzelventileinrichtung, das heißt mit lediglich einem Schließkörper und einer Betätigungsvorrichtung zum Einsatz zwischen einem Zulauf und einem Ablauf vorzugsweise symmetrisch aufgebaut.

Bei Ausführung als kombinierte Ventilvorrichtung, das heißt Zusammenfassung der beiden Ventileinrichtungen und Zuordnung zu den drei oben genannten Anschlüssen erfolgt die Ausgestaltung der Einsätze derart, daß auch hier ein möglichst hoher Grad an Standardisierung erzielt wird, das heißt der Anteil der Elemente mit identischem Aufbau möglichst hoch ist. Die den einzelnen Ventileinrichtungen zugeordneten Einsätze sind vorzugsweise einteilig ausgeführt. Eine Ausführung aus mehreren Einzelelementen, die zu einer baulichen Einheit zusammengefügt werden, ist ebenfalls denkbar. Bei Zusammenfassung zweier Ventileinrichtungen zu einer kombinierten Ventilvorrichtung wird die Zwischenwand zwischen den Einzelelementen der Ventileinrichtungen vorzugsweise von einem gemeinsam nutzbaren Einsatzelement gebildet. Als dieses fungiert dabei entweder der einer Ventileinrichtung zugeordnete Einsatz oder ein zwischen den Einsatzteilelementen beider Ventileinrichtungen angeordnetes weiteres separates Einsatzteilelement, wobei jedoch erstere Lösung aufgrund der geringeren Bauteilanzahl zu bevorzugen ist.

Bei Ausbildung beziehungsweise Zusammenfassung zweier erfindungsgemäß gestalteter Ventileinrichtungen zu einer kombinierten Ventileinrichtung mit drei Anschlüssen kann diese unter einem weiteren Aspekt der Erfindung um zusätzliche Bauelemente ergänzt werden, um zusätzliche Funktionen zu erfüllen. Denkbar ist dabei beispielsweise die Integration von Einrichtungen zur Erfassung einer Zustandsgröße, insbesondere des Druckes in der Arbeitskammer zum Verbraucher. Diese ist in der Regel in Form eines Drucksensors ausgeführt. Der Vorteil besteht darin, daß durch Kopplung mit der entsprechenden Elektronik, insbesondere Anbindung beziehungsweise Einbeziehung in eine Steuereinrichtung eine Regelung dieser Zustandsgröße, insbesondere des Druckes möglich ist.

Eine Weiterentwicklung besteht darin, zusätzlich zum Drucksensor eine elektronische Steuereinrichtung in der kombinierten Ventileinrichtung zu integrieren. Diese Integration ermöglicht die Schaffung eines kompakten, einfach montierbaren und reparaturfreundlichen Druckregelmodules, welches als vollständig handelbare Einheit anbietbar ist.

Die erfindungsgemäße Lösung wird nachfolgend anhand von Figuren erläutert. Darin ist im einzelnen folgendes dargestellt:
- Figur 1: verdeutlicht anhand einer Schnittdarstellung eine Ausführung erfindungsgemäß gestalteter Ventileinrichtungen in einer kombinierten Ventilvorrichtung;
- Figur 2: verdeutlicht eine Ausführung gemäß Figur 1 mit Mitteln zur Erfassung einer Zustandsgröße in der Arbeitskammer;
- Figur 3: verdeutlicht eine Ausführung gemäß Figur 1 mit Integration eines elektronischen Steuergerätes.

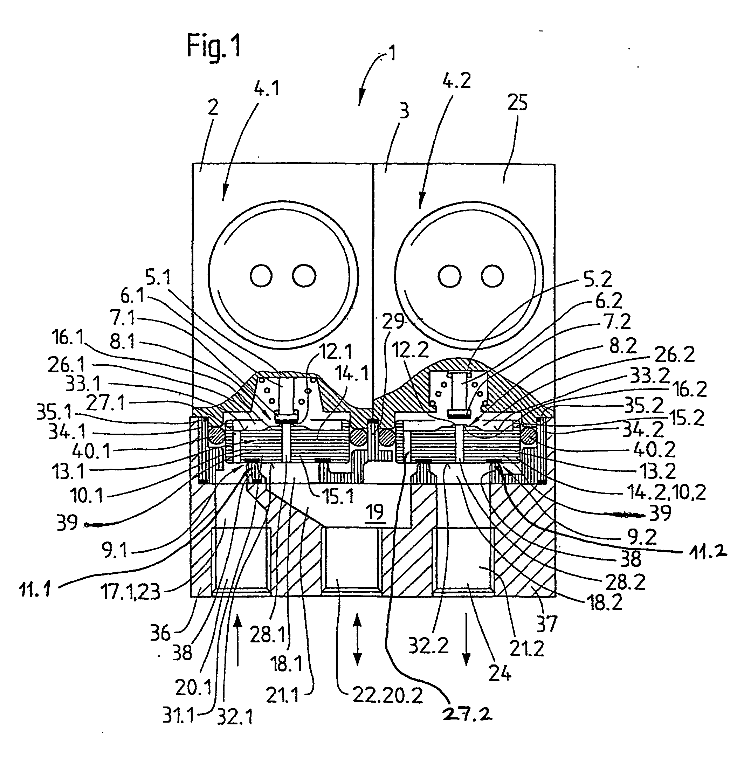

Die Figur 1 verdeutlicht anhand einer Schnittdarstellung in Form eines Axialschnittes eine vorteilhafte Ausführung einer kombinierten Ventilvorrichtung 1. Diese umfaßt zwei Ventileinrichtungen, eine erste Ventileinrichtung 2 und eine zweite Ventileinrichtung 3, wobei die erste Ventileinrichtung 2 in der kombinierten Ventilvorrichtung 1 als Einlaßventil und die zweite Ventileinrichtung 3 als Auslaßventil fungiert, zur Steuerung der Verbindung zwischen einer nicht dargestellten Druckmittelquelle und einem ebenfalls nicht dargestellten Verbraucher oder einer Verbraucheranlage, sowie zur Steuerung der Druckentlastung am Verbraucher.

Beide Ventileinrichtungen - erste Ventileinrichtung 2 und zweite Ventileinrichtung 3 - sind als elektromagnetisch betätigbare Ventileinrichtungen ausgeführt. Die erste Ventileinrichtung 2, das heißt die Einlaßventileinrichtung und die zweite Ventileinrichtung 3, das heißt die Auslaßventileinrichtung umfassen dazu jeweils Mittel 4.1 beziehungsweise 4.2 zur elektromagnetischen Betätigung. Die Mittel 4.1 beziehungsweise 4.2 zur elektromagnetischen Betätigung der ersten Ventileinrichtung 2 beziehungsweise der zweiten Ventileinrichtung 3 weisen jeweils einen Betätigungsmagneten 5.1 für die Mittel 4.1 zur elektromagnetischen Betätigung und 5.2 für die Mittel 4.2 zur elektromagnetischen Betätigung und einen Anker 6.1 beziehungsweise 6.2 auf.

Jede Ventileinrichtung - erste Ventileinrichtung 2 und zweite Ventileinrichtung 3 - umfaßt ein Vorsteuerventil, welches mit 8.1 für die erste Ventileinrichtung 2 und 8.2 für die zweite Ventileinrichtung 3 bezeichnet ist, und ein Hauptventil 9.1 beziehungsweise 9.2. Jedes Hauptventil 9.1 und 9.2 weist wenigstens ein Hauptventilglied 10.1 beziehungsweise 10.2 und einen ortsfesten Ventilsitz 11.1 beziehungsweise 11.2 auf, während jedes Vorsteuerventil 8.1 und 8.2 ein Vorsteuerventilglied 12.1 beziehungsweise 12.2 und einen mit dem Anker 6.1 beziehungsweise 6.2 der Betätigungsmagneten 5.1 beziehungsweise 5.2 gekoppelten Vorsteuerventilkörper 7.1 beziehungsweise 7.2 umfaßt. Die Hauptventilglieder 10.1, 10.2 und die Vorsteuerventilglieder 12.1, 12.2 jeder Ventileinrichtung - erster Ventileinrichtung 2 und zweiter Ventileinrichtung 3 sind in einer baulichen Einheit 13.1 beziehungsweise 13.2 zusammengefaßt, so daß eine Bewegung des Hauptventilgliedes 10.1 oder 10.2 in Öffnungsrichtung des Hauptventiles 9.1 beziehungsweise 9.2 zugleich eine Bewegung des Vorsteuerventilgliedes 12.1 beziehungsweise 12.2 in Schließrichtung des Vorsteuerventiles 8.1 beziehungsweise 8.2 bewirkt. Die baulichen Einheiten 13.1, 13.2 werden dabei jeweils von einem Schließkörper 14.1, 14.2 gebildet, welcher beispielsweise ein Kolbenelement 15.1, 15.2 und einen mit dem Kolbenelement 15.1, 15.2 gekoppelten Schaft 16.1, 16.2 umfaßt, wobei die Hauptventilglieder 10.1, 10.2 jeweils von den Kolbenelementen 15.1, 15.2 und die Vorsteuerventilglieder 12.1, 12.2 vom Schaftende gebildet werden. Die Ausführung mit Schaft 16.1 beziehungsweise 16.2 ist jedoch nicht zwingend.

Jede Ventileinrichtung - erste Ventileinrichtung 2 und zweite Ventileinrichtung 3 umfaßt eine Einlaßkammer 17.1 beziehungsweise 17.2 und eine Auslaßkammer 18.1 beziehungsweise 18.2, welche mit entsprechenden Anschlüssen koppelbar sind. Dabei sind die Hauptventile 9.1 und 9.2 zwischen den entsprechenden Einlaßkammem 17.1 beziehungsweise 17.2 und den Auslaßkammern 18.1 beziehungsweise 18.2 angeordnet. Jede der Kammern - Einlaßkammem 17.1, 17.2 und Auslaßkammem 18.1, 18.2 - sind mit Anschlüssen - hier einem ersten Anschluß 20.1 für die Einlaßkammer 17.1 und einem zweiten Anschluß 21.1 für die Auslaßkammer 18.1 der ersten Ventileinrichtung 2 sowie einem ersten Anschluß 20.2 für die Einlaßkammer 17.2 und einen zweiten Anschluß 21.2 für die Auslaßkammer 18.2 der zweiten Ventileinrichtung 3 - gekoppelt. Im dargestellten Fall der kombinierten Ventilvorrichtung 1 sind die Auslaßkammer 18.1 der ersten Ventileinrichtung 2 und die Einlaßkammer 17.2 der zweiten Ventileinrichtung 3 zusammengefaßt und bilden eine mit dem Verbraucher koppelbare Arbeitskammer 19. Neben der Zusammenführung von Einlaßkammer 17.2 der zweiten Ventileinrichtung 3 und Auslaßkammer 18.1 der ersten Ventileinrichtung 2 sind auch die damit verbundenen Anschlüsse - zweiter Anschluß 21.1 der ersten Ventileinrichtung 2 und erster Anschluß 20.2 der zweiten Ventileinrichtung 3 zu einem Anschluß 22 zusammengefaßt.
Der erste Anschluß 20.1 der ersten Ventileinrichtung 2 wird dabei von einem, mit einer Druckmittelquelle koppelbaren Zulauf 23 gebildet. Der zweite Anschluß 21.1 der ersten Ventileinrichtung 2 und damit der Anschluß 22 der kombinierten Ventilvorrichtung 1 wird von einem Anschluß zum Verbraucher gebildet. Der erste Anschluß 20.2 der zweiten Ventileinrichtung 3 wird zum Zwecke der Druckentlastung ebenfalls vom Anschluß 22 zum Verbraucher gebildet, während der zweite Anschluß 21.2 der zweiten Ventileinrichtung 3 einen Anschluß 24 zu einem Entlastungsraum darstellt. Der Begriff Anschluß ist dabei nicht nur derart zu verstehen, daß es sich hierbei bereits um ein Element einer form- und/oder kraftschlüssigen Verbindung mit entsprechenden Leitungen handelt, der Begriff Anschluß dient hier lediglich der Wiedergabe der Funktion, d.h. die Bereitstellung der Möglichkeit einer Kopplung mit einer Druckmittelquelle, einem Verbraucher e.t.c. Das Gehäuse 25 der kombinierten Ventilvorrichtung 1 weist dabei drei Anschlüsse, den Zulauf 23, welcher mit einer Druckmittelquelle koppelbar ist, den Anschluß 22 zum Verbraucher, der zur Versorgung be- und zur Entlüftung entlüftet wird und einen Anschluß 24 zur Entlüftung, welcher auch als Anschluß zur Kopplung mit einem Entlastungsraum bezeichnet wird. Denkbar ist es auch, hier im einzelnen jedoch nicht dargestellt, den zweitem Anschluß 21.1 der ersten Ventileinrichtung 2 und den ersten Anschluß 20.2 der zweiten Ventileinrichtung 3 nicht unmittelbar miteinander zu verbinden, sondern über ein, hier nicht dargestelltes Modul, welches einen Verbindungsblock für einzelne Kanäle darstellt, und als Ausgang den Anschluß an den Verbraucher beinhaltet.

Jedem Vorsteuerventil 8.1, 8.2 ist eine Vorsteuerkammer 26.1, 26.2 zugeordnet. Die Vorsteuerkammer 26.1 ist dabei mit dem ersten Anschluß 20.1 der ersten Ventileinrichtung 2, das heißt dem Zulauf 23 beziehungsweise der mit dieser gekoppelten Einlaßkammer 17.1 verbunden, während die Vorsteuerkammer 26.2 der zweiten Ventileinrichtung 3 mit dem ersten Anschluß 20.2 der zweiten Ventileinrichtung 3, welche vom Anschluß 22 zum Verbraucher gebildet wird, beziehungsweise der Arbeitskammer 19 gekoppelt ist. Die Kopplung zwischen der Einlaßkammer 17.1 der ersten Ventileinrichtung 2 und 17.2 der zweiten Ventileinrichtung 3 und der Vorsteuerkammer 26.1 beziehungsweise 26.2 erfolgt über einen im Schließkörper 14.1 beziehungsweise 14.2 angeordneten Verbindungskanal 27.1 beziehungsweise 27.2. Dieser Verbindungskanal 27.1 beziehungsweise 27.2 ist während des Betriebes in seinem Querschnitt unveränderlich und bildet daher eine Konstantdrossel. Der Verbindungskanal 27.1 beziehungsweise 27.2 verläuft vorzugsweise parallel zum Zulauf 23 beziehungsweise Anschluß 22 an den Verbraucher. Eine geneigte Ausführung zur Strömungsrichtung im Zulauf 23 beziehungsweise zum Anschluß an den Verbraucher 22 ist ebenfalls denkbar, wird jedoch in der Regel nicht angestrebt.

Die Vorsteuerkammem 26.1, 26.2 sind derart angeordnet, daß über diese ein Gegendruck zum Druck in der Einlaßkammer 17.1 am Hauptventil 9.1 beziehungsweise der Arbeitskammer 19 am Hauptventil 9.2 der zweiten Ventileinrichtung 3 erzeugt wird. Dabei wird wenigstens ein Teilbereich 31.1 der zur Einlaßkammer 17.1 ausgerichteten Stirnfläche 32.1 des Hauptventiles 9.1 mit Druck aus der Einlaßkammer 17.1 beaufschlagt, während der Druck in der Vorsteuerkammer 26.1 auf der von der Einlaßkammer 17.1 weggerichteten Stirnfläche 33.1 am ersten Schließkörper 14.1 wirkt. In Analogie gilt diese Aussage auch für die zweite Ventileinrichtung 3, hier handelt es sich um den Teilbereich 31.2, welcher auf der zur Arbeitskammer 19 gerichteten Stimfläche 32.2 vom Druck in der Arbeitskammer 19 beaufschlagt wird, während der Druck in der Vorsteuerkammer 26.2 auf der von der Arbeitskammer 19 weggerichteten Stirnfläche 33.2 wirkt.

Das Vorsteuerventil 8.1 beziehungsweise 8.2 ist über wenigstens einen weiteren zweiten Verbindungskanal 28.1 beziehungsweise 28.2 mit dem entsprechenden Auslaß 18.1 beziehungsweise 18.2 verbunden. Dieser erstreckt sich vorzugsweise direkt in axialer Richtung von der von der Einlaßkammer weggerichteten Stimfläche 33.1, 33.2 am Schließkörper 14.1, 14.2 durch den Schließkörper 14.1, 14.2 zur Stirnfläche 32.1, 32.2. Der Verbindungskanal 28.1, 28.2 weist vorzugsweise über seine axiale Erstreckung einen konstanten Querschnitt auf.

Der Kanal 27.1 beziehungsweise 27.2 weist vorzugsweise über seine Länge einen, während des Betriebes nicht veränderlichen Querschnitt auf, so daß dieser die Funktion einer Konstantdrossel zwischen der Einlaßkammer 17.1 und der Vorsteuerkammer 26.1 beziehungsweise der Arbeitskammer 19 und der Vorsteuerkammer 26.2 übernimmt. Das Vorsteuerventil 8.1 beziehungsweise 8.2 ist als steuerbare Drosseleinrichtung ausgeführt. Diese wird dabei jeweils von den Vorsteuerventilgliedern 12.1 und 12.2, welche mit den Hauptventilen 9.1 und 9.2, insbesondere dem Hauptventilglied 10.1 beziehungsweise 10.2 die bauliche Einheit 13.1 beziehungsweise 13.2 bilden, und Vorsteuerventilkörpern 7.1, 7.2, welche jeweils mit den Ankern 6.1, 6.2 der Betätigungsmagneten 5.1, 5.2 verbunden sind, gebildet. Im dargestellten Fall sind beide Betätigungsmagneten 5.1 beziehungsweise 5.2 im unbestromten Zustand dargestellt, wobei dieser Zustand dadurch charakterisiert ist, daß die erste Ventileinrichtung 2 geschlossen ist und somit den Zulauf 23 sperrt, während die zweite Ventileinrichtung 3 geöffnet ist, so daß zwischen dem Anschluß zum Verbraucher 22 und der Atmosphäre beziehungsweise einem Entlastungsraum 24 eine Verbindung besteht, wobei hier jedoch das Hauptventil 9.2 im geschlossenen Zustand wiedergegeben ist. Die weiteren Zustände sind durch die weiter unten folgende Funktionsbeschreibung erläutert.

Erfindungsgemäß sind neben der Integration von Konstantdrossel und steuerbarer Drossel in Form des Vorsteuerventiles 8.1 beziehungsweise 8.2 in einer baulichen Einheit 13.1 beziehungsweise 13.2 die einzelnen Elemente - Hauptventil 9.1, 9.2 und Vorsteuerventileinrichtung 8.1, 8.2 der beiden Ventileinrichtungen 2 und 3 - jeweils mittels eines Einsatzes 34.1, 34.2 im Gehäuse 25 druckmitteldicht eingspannt. Die Einsätze 34.1, 34.2 sind im Gehäuse 25 integriert und derart ausgelegt und angeordnet, daß diese sich an den Innenwänden 35 des Gehäuses 25 abstützen, insbesondere am Gehäuseinnenwandbereich 35.1 an einem Gehäusegrundelement 36 sowie einem Gehäuseinnenwandbereich 35.2, welcher von einem mit dem Gehäusegrundelement 36 das Gehäuse 25 bildenden Deckelelement 37 gebildet wird. Der ortsfeste Ventilsitz 11.1 beziehungsweise 11.2 des jeweiligen Hauptventiles 9.1 oder 9.2 wird dabei vom Einsatz 34.1, 34.2 gebildet. Der Einsatz 34.1 der ersten Ventileinrichtung 2 weist dazu einen Vorsprung 38 auf, welcher mit wenigstens einer Teilfläche 39 den Ventilsitz 11.1 bildet. Der Schließkörper 14.1, der in Form des Kolbenelementes 15.1 ausgeführt ist, kann mit seiner zum Zulauf 23 gerichteten Fläche 32.1 am Ventilsitz 11.1 zum Anliegen kommen.

Die Vorsteuerkammer 26.1 wird zwischen dem Einsatz 34.1, dem Schließkörper 14.1 und der Gehäuseinnenwand 35 gebildet. Dazu ist eine Dichteinrichtung 40.1 vorgesehen, welche ebenfalls zwischen dem Einsatz 34.1 und dem Schließkörper 14.1 angeordnet ist.

In Analogie gelten die Ausführungen hinsichtlich der Ausbildung der Vorsteuerkammer 26.2 und der dazu erforderlichen Dichteinrichtungen 40.2 auch für die zweite Ventileinrichtung 3. Allerdings ist zu berücksichtigen, daß die zweite Ventileinrichtung 3 hier ebenfalls im unbestromten Zustand der Betätigungsmagneten 5.2 dargestellt ist, wobei dieses eine geöffnete Stellung aufweist.

Die beiden Ventileinrichtungen - erste Ventileinrichtung 2 und zweite Ventileinrichtung 3 - sind zu einer Ventilkombination in Form einer kombinierten Ventileinrichtung 1 zusammengefaßt. Die einzelnen Ventileinrichtungen 2 und 3 sind dabei vorzugsweise entsprechend der Anordnung und Ausgestaltung der einzelnen Ventile - Hauptventil und Vorsteuerventil - gleich aufgebaut und ausgelegt. Durch die Kombination besteht jedoch die Möglichkeit, das entweder auf ein separates Einsatzteilelement verzichtet werden kann, oder die Einsätze derart ausgebildet sind, daß einer die Funktion der Trennwand 29 zwischen beiden Ventileinrichtungen 2 und 3 übernimmt, so daß der Einsatz der jeweils anderen Ventileinrichtung im Zwischenbereich zwischen beiden Ventileinrichtungen 2 und 3 nicht mehr ausgebildet sein muß.

Beide Ventileinrichtungen - erste Ventileinrichtung 2 in Form des Einlaßventiles und zweite Ventileinrichtung 3 in Form des Auslaßventiles - arbeiten nach dem gleichen Prinzip, dem Düsen-Prallplattenprinzip. Dabei werden steuerbare Widerstände zum Einstellen von Drücken verwendet

Nachfolgend wird die Funktionsweise zuerst für die erste Ventileinrichtung 2 erläutert. Die erste Ventileinrichtung 2 ist an den Vorratsdruck für die Einlaßkammer 17.1 angeschlossen. Durch die Konstantdrossel in Form des Verbindungskanales 27.1 im Schließkörper 14.1 herrscht dieser Vorratsdruck, das heißt der Druck in der Einlaßkammer 17.1 auch in der Vorsteuerkammer 26.1, da die steuerbare Drosseleinrichtung in Form des Vorsteuerventiles 8.1 bei unbestromtem Betätigungsmagneten 5.1 geschlossen ist. Da der in der zum Verbraucher führenden Kammer, das heißt Arbeitskammer 19, vorherrschende Druck in diesem Fall kleiner oder maximal gleich dem Druck in der Einlaßkammer 17.1 ist, bleibt bei geschlossenem Vorsteuerventil 8.1 das Hauptventil 9.1 ebenfalls geschlossen. Zur Erhöhung des Druckes in der zum Verbraucher führenden Kammer, das heißt Arbeitskammer 19, wird dabei der Betätigungsmagnet 5.2 der zweiten Ventileinrichtung 3 bestromt Dies führt zu einem Schließen des Vorsteuerventiles 8.2 der zweiten Ventileinrichtung 3. Wird nunmehr der Betätigungsmagnet 5.1 der ersten Ventileinrichtung 2 bestromt, öffnet die steuerbare Drosseleinrichtung in Form der Vorsteuerventileinrichtung 8.1 am ersten Schließkörper 14.1. Das Fluid aus der Vorsteuerkammer 26.1 strömt über das Vorsteuerventil 8.1 zur Arbeitskammer 19. Über die als Konstantdrossel ausgeführte Drosseleinrichtung in Form des Verbindungskanales 27.1 im Schließkörper 14.1 strömt Fluid aus der Einlaßkammer 17.1 nach. Aus dem Öffnungsverhältnis zwischen Konstantdrossel und Vorsteuerventil 8.1 stellt sich in der Vorsteuerkammer 26.1 ein Vorsteuerdruck ein. Die dadurch auf die Flächen des Kolbenelementes 15.1 des Schließkörpers 14.1 wirkenden Drücke und am Schließkörper 14.1 angreifenden Kräfte halten diesem im Gleichgewicht. Wird das Vorsteuerventil 8.1 dabei ganz geöffnet, wird der Druck in der Vorsteuerkammer 26.1 sofort auf einen relativ kleinen Druck abgebaut. Das Kräftegleichgewicht am Schließkörper 14.1 ist gestört. Dadurch wird die Hauptventileinrichtung 9.1 geöffnet. Fluid strömt dabei aus der Einlaßkammer 17.1 direkt in die Arbeitskammer 19 und damit zum Anschluß 22 an den Verbraucher. Infolge des Hubes des Schließkörpers 14.1 wird dabei am anderen Ende der Öffnungshub der steuerbaren Drosseleinrichtung 8.1 reduziert. Daraus resultiert eine stärkere Drosselung des Druckes im Vorsteuerventil 8.1. Der Schließkörper 14.1 bewegt sich dabei in Schließrichtung der ersten Ventileinrichtung 2 und drosselt das Fluid von der Einlaßkammer 17.1 zum Anschluß 22 zum Verbraucher, insbesondere der Arbeitskammer 19 so ab, daß der Schließkörper 14.1 in einem Schwebezustand gehalten wird. Fluid strömt in diesem Zustand von der Einlaßkammer 17.1 durch das Hauptventil 9.1 und den Bypass über die beiden Drosseln 27.1 beziehungsweise 8.1 zum Anschluß 22 an den Verbraucher, das heißt die Arbeitskammer 19. Unter Beachtung der Stellzeiten wird der Betätigungsmagnet 5.1 der ersten Ventileinrichtung 2 rechtzeitig wieder stromlos geschaltet und das Vorsteuerventil 8.1 dadurch rechtzeitig ganz geschlossen, was schließlich mit dem Anstieg des Druckes in der Vorsteuerkammer 26.1 zum Schließen des Hauptventiles 9.1 der ersten Ventileinrichtung 2 führt, so daß mit dem Schließen des Hauptventiles 9.1 der vorgesehene Verbraucherdruck erreicht wird. Zum Halten des Druckes in der Arbeitskammer 19 und damit im Anschluß 22 zum Verbraucher bleibt der Betätigungsmagnet 5.2 der zweiten Ventileinrichtung bestromt und der Betätigungsmagnet der ersten Ventileinrichtung 2 unbestromt.

Das Absenken des Druckes im Zulauf 22 zum Verbraucher erfolgt in ähnlicher Weise mit der zweiten Ventileinrichtung 3, insbesondere der Betätigung des Betätigungsmagneten 5.2. Der Betätigungsmagnet 5.1 der ersten Ventileinrichtung 2 bleibt während dieser Phase unbestromt. Durch Absenken der Bestromung am Betätigungsmagneten 5.2 der zweiten Ventileinrichtung wird das Vorsteuerventil 8.2, insbesondere die steuerbare Drossel geöffnet und der Druck aus der Vorsteuerkammer 26.2 der zweiten Ventileinrichtung 3 reduziert. Das Hauptventil 9.2 öffnet und läßt Fluid vom Verbraucher an die Atmosphäre.

Die an den Schließkörpern 14.1 beziehungsweise 14.2 wirksamen druckbeaufschlagten Flächen bewirken in Verbindung mit der Lage und der Breite des Steuerbereiches der Vorsteuerventileinrichtung, daß in Teilbereichen eine Druckänderung in der Kammer zum Verbraucher, das heißt in der Arbeitskammer 19 nur über die Drosseln 27.1, 8.1 im Schließkörper 14.1 beziehungsweise 27.2, 8.2 im Schließkörper 14.2 erreicht wird. Dies ermöglicht eine feinfühlige Anpassung in den Grenzbereich.

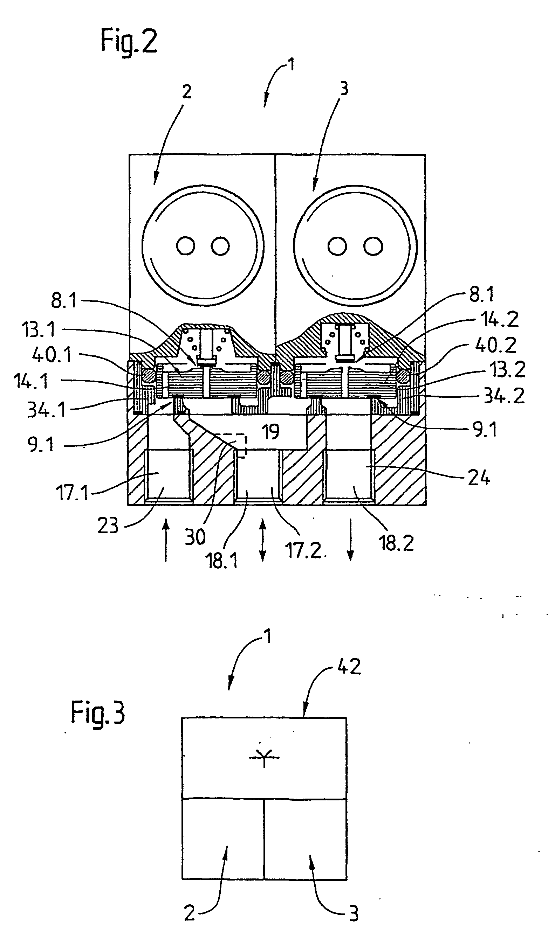

Unter einem weiteren Aspekt der Erfindung besteht gemäß Figur 2 die Möglichkeit, die in der Figur 1 dargestellte Ventilkombination 1 um eine Einrichtung 30 zur Erfassung des Druckes in der Arbeitskammer 19 zu erweitem. Dies bietet die Möglichkeit, eine Ventilkombination 1 mit Druckerfassungseinrichtung 30 als selbstständig handelbare Baueinheit 41 anzubieten, welche in Steuer- oder Regelvorrichtungen auf einfache Art und Weise integrierbar ist.

In einer Weiterentwicklung der Ausführung gemäß der Figuren 1 oder 2 erfolgt die Integration eines elektronischen Steuergerätes 42 in die kombinierte Ventileinrichtung 1. Damit besteht, wie in Figur 3 dargestellt, die Möglichkeit der Schaffung eines Druckregelmoduls.

### Bezugszeichenliste

- 1: Kombinierte Ventilvorrichtung
- 2: erste Ventileinrichtung
- 3: zweite Ventileinrichtung
- 4.1, 4.2: Mittel zur elektromagnetischen Betätigung
- 5.1, 5.2: Betätigungsmagnet
- 6.1, 6.2: Anker
- 7.1, 7.2: Vorsteuerventilkörper
- 8.1, 8.2: Vorsteuerventil
- 9.1, 9.2: Hauptventil
- 10.1, 10.2: Hauptventilglied
- 11.1: ortsfester Sitz des Hauptventiles 9.1
- 11.2: ortsfester Sitz des Hauptventiles 9.2
- 12.1, 12.2: Vorsteuerventilglied
- 13.1, 13.2: bauliche Einheit
- 14.1, 14.2: Schließkörper
- 15.1, 15.2: Kolbenelement
- 16.1, 16.2: Schaft
- 17.1: Einlaßkammer der ersten Ventileinrichtung 2
- 17.2: Einlaßkammer der zweiten Ventileinrichtung 3
- 18.1: Auslaßkammer der ersten Ventileinrichtung 2
- 18.2: Auslaßkammer der zweiten Ventileinrichtung 3
- 19: Arbeitskammer
- 20.1: erster Anschluß der ersten Ventileinrichtung 2
- 20.2: erster Anschluß der zweiten Ventileinrichtung 3
- 21.1: zweiter Anschluß der ersten Ventileinrichtung 2
- 21.2: zweiter Anschluß der zweiten Ventileinrichtung 3
- 22: Anschluß zum Verbraucher
- 23: Zulauf
- 24: Anschluß zum Entlastungsraum
- 25: Gehäuse
- 26.1, 26.2: Vorsteuerkammer
- 27.1, 27.2: Verbindungskanal zwischen Einlaßkammer und Vorsteuerkammer
- 28.1, 28.2: Verbindungskanal zwischen Vorsteuerkammer und Vorsteuerventil
- 29: Trennwand
- 30: Einrichtung zur Erfassung des Druckes
- 31.1,31.2: Teilbereich
- 32.1: zur Einlaßkammer 23 gerichtete Stirnfläche am Schließkörpers 14.1
- 32.2: zur Arbeitskammer 19 gerichtete Stimfläche am Schließkörper 14.2
- 33.1: von der Einlaßkammer 23 weggerichtete Stirnfläche am Schließkörpers 14.1
- 33.2: von der Arbeitskammer 19 weggerichtete Stirnfläche am Schließkörper
- 34.1, 34.2: zweiteiliger Einsatz
- 34.11: erstes Einzelelement des zweiteiligen Einsatzes der ersten Ventileinrichtung
- 34.12: zweites Einsatzteilelement des zweiteiligen Einsatzes der ersten Ventileinrichtung
- 34.21: erstes Einsatzteilelement des zweiteiligen Einsatzes der zweiten Ventileinrichtung
- 34.22: zweites Einsatzteilelement des zweiteiligen Einsatzes der zweiten Ventileinrichtung
- 35: Innenwand
- 35.1, 35.2: Innenwandbereich
- 36: Gehäusegrundelement
- 37: Deckelelement
- 38: Vorsprung
- 39: Teilfläche
- 40.: Dichteinrichtung
- 41: bauliche Einheit
- 42: Steuereinrichtung

## Patentansprüche

1. Kombinierte Ventilvorrichtung (1)
1.1 mit einem Gehäuse;
1.2 mit einer ersten und einer zweiten elektromagnetisch betätigbaren Ventileinrichtung (2, 3);
1.3 wobei jede Ventileinrichtung (2, 3)
1.2.1 eine Betätigungsvorrichtung (4.1, 4.2);
1.3.2 ein, zwischen einer.Einlaßkammer (17.1, 17.2) und einer Auslaßkammer (18.1, 18.2) angeordnetes Hauptventil (9.1, 9.2), umfassend ein Hauptventilglied (10.1, 10.2) und einen ortsfesten Ventilsitz (11.1, 11.2);
1.3.3 eine Vorsteuerkammer (26.1, 26.2), welche über ein Vorsteuerventil (8.1, 8.2), umfassend mindestens ein Vorsteuerventilglied (12.1, 12.2) und einen mit der elektromagnetischen Betätigungsvorrichtung (4.1, 4.2) verbundenen Ventilkörper (12.1, 12.2), mit der Auslaßkammer (18.1) und über mindestens einen Verbindungskanal (27.1, 27.2) mit während des Betriebes nicht veränderbarem Kanalquerschnitt mit der Einlaßkammer (17.1, 17.2) verbunden; umfaßt
wobei
1.3.4 das Hauptventilglied (10.1, 10.2) und das Vorsteuerventilglied (12.1, 12.2) in einer baulichen Einheit (13.1, 13.2) zusammengefaßt sind, so daß eine Bewegung des Hauptventilgliedes (10.1, 10.2) in Öffnungsrichtung des Hauptventiles (9.1, 9.2) zugleich eine Bewegung des Vorsteuerventilgliedes (12.1, 12.2) in Schließrichtung des Vorsteuerventiles (8.1, 8.2) bewirkt;
1.3.5 die Vorsteuerkammer (26.1, 26.2) dem Hauptventilglied (10.1, 10.2) derart zugeordnet ist, daß das Hauptventilglied (10.1, 10.2) wenigstens in einem Teilbereich seiner in Strömungsrichtung des Druckmittels betrachtet einander entgegengesetzt ausgerichteten Flächen (32.1, 32.2, 33.1, 33.2) jeweils vom in der Einlaßkammer (17.1, 17.2) vorherrschenden Druck und dem in der Vorsteuerkammer (26.1, 26.2) vorherrschenden Druck beaufschlagt wird;
1.3.6 die Vorsteuerkammer (26.1, 26.2) über wenigstens einen, sich durch die bauliche Einheit (13.1, 13.2) erstreckenden Verbindungskanal (27.1, 27.2) mit der Einlaßkammer (17.1, 17.2) verbunden ist;
1.3.7 die Verbindung zwischen Vorsteuerventil (8.1, 8.2) und Auslaßkammer (18.1, 18.2) über mindestens einen weiteren, sich durch die bauliche Einheit (13.1, 13.2) erstreckenden Verbindungskanal (44.1, 44.2) erfolgt
1.4. mit mindestens drei, mit den Kammern (17.1, 17.2, 18.1, 18.2) der Ventileinrichtungen (2, 3) gekoppelten Anschlüssen (23, 22, 24), wobei die Einlaßkammer (17.1) der ersten Ventileinrichtung (2) mit einer Druckmittelquelle koppelbar ist, die Auslaßkammer (18.1) der ersten Ventileinrichtung (2) und die Einlaßkammer (17.2) der zweiten Ventileinrichtung (3) mit mindestens einem Verbraucher koppelbar sind und die Auslaßkammer (18.2) der zweiten Ventileinrichtung (3) von einer Entlastungskammer gebildet wird, welche mit einem Entlastungsraum gekoppelt ist;
1.5 wobei die Einlaßkammer (17.2) der zweiten Ventileinrichtung (3) und die Auslaßkammer (18.1) der ersten Ventileinrichtung (2) von einer Arbeitskammer (19) gebildet werden, welche beiden Ventileinrichtungen (2, 3) zugeordnet ist und die über mindestens einen Anschluß (22) mit einem oder mehreren Verbrauchern koppelbar ist;
**gekennzeichnet durch** die Folgenden Merkmale:
1.6 der ortsfeste Sitz (11.1, 11.2) jedes Hauptventils (9.1, 9.2) wird von einem in das Gehäuse der Ventileinrichtung (2, 3) einspannbaren Einsatz (34.1, 34.2) gebildet, wobei die Vorsteuerkammer (26.1, 26.2) von einem zwischen der baulichen Einheit (13.1, 13.2) und dem Einsatz (34.1, 34.2) vorhandenen Zwischenraum, welcher **durch** das Vorsehen einer Dichteinrichtung zwischen baulicher Einheit (13.1, 13.2) und dem Einsatz (34.1, 34.2) und der Gehäuseinnenwand begrenzt wird, gebildet wird;
1.7 die Zwischenwand (29) wird zwischen beiden Ventileinrichtungen (2, 3) jeweils von einem der Einsätze (34.1, 34.2) der beiden Ventileinrichtungen (2, 3) gebildet

2. Kombinierte Ventilvorrichtung (1) nach Anspruch 1, **dadurch gekennzeichnet, daß** die bauliche Einheit (13.1, 13.2) jeder Ventileinrichtung (2, 3) durch Ausbildung des Hauptventilgliedes (10.1, 10.2) und des Vorsteuerventilgliedes (12.1, 12.2) an einem einteiligem Schließkörper (14.1, 14.2) erzeugt wird.

3. Kombinierte Ventilvorrichtung (1) nach Anspruch 2, **gekennzeichnet durch** folgende Merkmale:
3.1 der Schließkörper (14.1, 14.2) weist einen ersten kolbenartigen Endbereich (15.1, 15.2) und einen an diesen anschließenden Schaft (16.1, 16.2) auf;
3.2 der kolbenartige Endbereich (15.1, 15.2) bildet das Hauptventilglied (10.1, 10.2);
3.3 das Vorsteuerventilglied (12.1, 12.2) wird vom vom kolbenartigen Endbereich (15.1, 15.2) wegweisenden Endbereich des Schaftes (16.1, 16.2) gebildet.

4. Kombinierte Ventilvorrichtung (1) nach einem der Ansprüche 1 bis 3, **dadurch gekennzeichnet, daß** an den miteinander in Wirkverbindung tretenden Flächenbereichen von Hauptventilglied (10.1, 10.2) oder Hauptventilsitz (11.1, 11.2) und/oder Vorsteuerventilglied (12.1, 12.2) oder Vorsteuerkörper (7.1, 7.2) Dichteinrichtungen angeordnet sind.

5. Kombinierte Ventilvorrichtung (1) nach Anspruch 4, **dadurch gekennzeichnet, daß** die erste Dichteinrichtung (40.1, 40.2) mindestens einen O-Ring umfaßt.

6. Kombinierte Ventilvorrichtung (1) nach einem der Ansprüche 1 bis 6, **dadurch gekennzeichnet, daß** die Betätigungseinrichtung (4.1, 4.2) der einzelnen Ventileinrichtungen (2, 3) mindestens einen Betätigungsmagneten (5.1, 5.2) und einen, mit diesem gekoppelten Anker (6.1, 6.2) umfaßt.

7. Kombinierte Ventilvorrichtung (1) nacn Anspruch 6, **dadurch gekennzeichnet, daß** der Betätigungsmagnet (5.1, 5.2) eine ansteigende Hub-/Stromcharakteristik aufweist, also ziehend ist.

8. Kombinierte Ventilvorrichtung (1) nach Anspruch 6, **dadurch gekennzeichnet, daß** der Betätigungsmagnet (5.1, 5.2) eine abfallende Hub-/Stromcharakteristik aufweist, also drückend ist.

9. Kombinierte Ventilvorrichtung (1) nach einem der Ansprüche 6 bis 8, **dadurch gekennzeichnet, daß** der Betätigungsmagnet (5.1, 5.2) in Form eines Proportional-Magneten ausgeführt ist.

10. Kombinierte Ventilvorrichtung (1) nach einem der Ansprüche 6 bis 9, **dadurch gekennzeichnet, daß** der Betätigungsmagnet (5.1, 5.2) in Form eines getakteten Magnet ausgeführt ist

11. Kombinierte Ventilvorrichtung (1) nach einem der Ansprüche 1 bis 10, **dadurch gekennzeichnet, daß** zwischen den Einsätzen (34.1, 34.2) und den Gehäusewänden (35) jeweils eine Dichteinrichung vorgesehen ist.

12. Kombinierte Ventilvorrichtung (1) nach einem der Ansprüche 1 bis 11, **dadurch gekennzeichnet, daß** die Betätigungsvorrichtung (4.1, 4.2) und die Schließkörper (14.1, 14.2) der beiden Ventileinrichtungen (2, 3) identisch aufgebaut und dimensioniert sind.

13. Kombinierte Ventilvorrichtung (1) nach einem der Ansprüche 1 bis 12, **dadurch gekennzeichnet, daß** in der Arbeitskammer (19) eine Einrichtung (30) zur Erfassung des Druckes angeordnet ist.

14. Kombinierte Ventilvorrichtung (1) nach einem der Ansprüche 1 bis 13, **dadurch gekennzeichnet, daß** diese mit einem Steuergerät (42) eine bauliche Einheit bildet.

## Claims

1. Combined valve system (1)
1.1 comprising a housing;
1.2 first and second valve devices (2, 3) adapted to be electromagnetically actuated;
1.3 wherein each valve device (2, 3) includes:
1.3.1 an actuating device (4.1, 4.2);
1.3.2 a main valve (9.1, 9.2) disposed between an inlet chamber (17.1, 17.2) and an outlet chamber and including a main valve element (10.1, 10.2) and a stationary valve seat (11.1, 11.2);
1.3.3 a pilot chamber (26.1, 26.2) that is connected to said outlet chamber (18.1, 18.2) via a pilot valve (8.1, 8.2), which includes at least one pilot valve element (12.1, 12.2) and a valve body (12.1, 12.2) connected to said electromagnetic actuating device (4.1, 4.2), and connected to said inlet chamber (17.1, 17.2) via at least one communication passage (27.1, 27.2) having a passage cross-section not variable during operation;
wherein
1.3.4 said main valve element (10.1, 10.2) and said pilot valve element (12.1, 12.2) are combined in one structural unit (13.1, 13.2) so that a movement of said main valve element (10.1, 10.2) in the opening direction of said main valve (9.1, 9.2) creates, at the same time, a movement of said pilot valve element (12.1, 12.2) in the closing direction of said pilot valve (8.1, 8.2);
1.3.5 said pilot chamber (26.1, 26.2) is associated with said main valve element (10.1, 10.2) in such a way that said main valve element (10.1, 10.2) is subjected to the respective pressure prevailing in the front part of said inlet chamber (17.1, 17.2) and the pressure prevailing in said pilot chamber (26.1, 26.2) at least in one partial region of its surfaces (32.1, 32.2, 33.1, 33.2) oriented each in opposition to the other, when seen in the flow direction of the pressurised medium;
1.3.6 said pilot chamber (26.1, 26.2) is connected to said inlet chamber (17.1, 17.2) via at least one communication passage (27.1, 27.2) extending through said structural unit (13.1, 13.2);
1.3.7 the communication between said pilot valve (8.1, 8.2) and said outlet chamber (18.1, 18.2) is realised via at least one further communication passage (44.1, 44.2) extending through said structural unit (13.1, 13.2).
1.4 at least three connectors (23, 22, 24) coupled to the chambers (17.1, 17.2, 18.1, 18.2) of said valve device (2, 3), with said inlet chamber (17.1) of said first valve device (2) being adapted to be coupled to a source of pressurised medium, said outlet chamber (18.1) of said first valve device (2) and said inlet chamber (17.2) of said second valve device (3) being adapted to be coupled to at least one load, and with said outlet chamber (18.2) of said second valve device (3) being constituted by a relief chamber that is coupled to a relief space;
1.5 wherein said inlet chamber (17.2) of said second valve device (3) and said outlet chamber (18.1) of said first valve device (2) are constituted by an operating chamber (19) that is associated with both valve devices (2, 3) and that is adapted to be coupled to one or several loads via at least one connector (22);
**characterised by** the following features:
1.6 the stationary seat (11.1, 11.2) of each main valve (9.1, 9.2) is formed by an insert (34.1, 34.2) adapted to be clamped into the housing of said valve device (2, 3), with said pilot chamber (26.1, 26.2) being formed by a space existing between said structural unit (13.1, 13.2) and said insert (34.1, 34.2), which is defined by the provision of a sealing means between said structural unit (13.1, 13.2) and said insert (34.1, 34.2) and the inner wall of said housing;
1.7 the partitioning wall (29) is formed between said two valve devices (2, 3) by a respective one of said inserts (34.1, 34.2) of said two valve devices (2, 3).

2. Combined valve system (1) according to Claim 1, **characterised in that** said structural unit (13.1, 13.2) of each valve device (2, 3) is created by the formation of said main valve element (10.1, 10.2) and said pilot valve element (12.1, 12.2) on a one-piece closing body (14.1, 14.2).

3. Combined valve system (1) according to Claim 2, **characterised by** the following features:
3.1 said closing body (14.1, 14.2) comprises a first piston-like terminal region (15.1, 15.2) and a shaft (1.1, 16.2) joining said region;
3.2 said piston-like terminal region (15.1, 15.2) constitutes said main valve element (10.1, 10.2);
3.3 said pilot valve element (12.1, 12.2) is formed by said terminal region of said shaft (16.1, 16.2) oriented away from said piston-like terminal region (15.1, 15.2).

4. Combined valve system (1) according to any of the Claims 1 to 3, **characterised in that** sealing means are disposed on said surface regions, which enter into an operative connection, of said main valve element (10.1, 10.2) or said main valve seat (11.1, 11.2) and/or said pilot valve element (12.1, 12.2) or said pilot body (7.1, 7.2).

5. Combined valve system (1) according to Claim 4, **characterised in that** said first sealing means (40.1, 40.2) includes at least one O-ring.

6. Combined valve system (1) according to any of the Claims 1 to 6, **characterised in that** said actuating means (4.1, 4.2) of the individual valve devices (2, 3) comprises at least one actuating magnet (5.1, 5.2) and an armature (6.1, 6.2) coupled to said magnet.

7. Combined valve system (1) according to Claim 6, **characterised in that** said actuating magnet (5.1, 5.2) presents an increasing valve lift/current characteristic, which means that it is pulling.

8. Combined valve system (1) according to Claim 6, **characterised in that** said actuating magnet (5.1, 5.2) presents a decreasing valve lift/current characteristic, which means that it is pushing.

9. Combined vaive system (1) according to any of the Claims 6 to 8, **characterised in that** said actuating magnet (5.1, 5.2) is configured in the form of a proportional magnet.

10. Combined valve system (1) according to any of the Claims 6 to 9, **characterised in that** said actuating magnet (5.1, 5.2) is configured in the form of a timed magnet.

11. Combined valve system (1) according to any of the Claims 1 to 10, **characterised in that** a respective sealing means is provided between said inserts (34.1, 34.2) and the walls (35) of said housing.

12. Combined valve system (1) according to any of the Claims 1 to 11, **characterised in that** said actuating device (4.1, 4.2) and said two valve devices (2, 3) present an identical structure and identical dimensions.

13. Combined valve system (1) according to any of the Claims 1 to 12, **characterised in that** a means (30) is provided in said operating chamber (19) for sensing the pressure.

14. Combined valve system (1) according to any of the Claims 1 to 13, **characterised in that** it forms one structural unit together with a controller device (42).

## Revendications

1. Système combiné de soupapes (1 )
1.1 comprenant un carter;
1.2 des premier et deuxième dispositifs de soupape (2, 3) aptes à être commande électromagnétique ;
1.3 dans lequel chaque dispositif de soupape (2, 3) comprend:
1.3.1 un dispositif de commande (4.1, 4.2);
1.3.2 une soupape principale (9.1, 9.2) disposée entre une chambre d'entrée (17.1, 17.2) et une chambre de sortie et renfermant un élément de soupape principal (10.1, 10.2) et une siège de soupape fixe (11.1, 11.2);
1.3.3 une chambre pilote (26.1, 26.2) qui est reliée à ladite chambre de sortie (18.1, 18.2) via une soupape pilote (8.1, 8.2), qui comprend au moins un élément de soupape pilote (12.1, 12.2) et un corps de soupape (12.1, 12.2) relié audit dispositif de commande électromagnétique (4.1, 4.2), et qui est reliée à ladite chambre d'entrée (17.1, 17.2) via au moins un passage de communication (27.1, 27.2) à une coupe transversale de passage non variable au cours de l'opération;
dans lequel
1.3.4 ledit élément de soupape principal (10.1, 10.2) et ledit élément de soupape pilote (12.1, 12.2) sont combinés en une seule unité structurelle (13.1, 13.2) et ainsi un mouvement dudit élément de soupape principal (10.1, 10.2) en sens d'ouverture de ladite soupape principale (9.1, 9.2) provoque, en même temps, un mouvement dudit élément de soupape pilote (12.1, 12.2) en sens de fermeture dudit soupape pilote (8.1, 8.2);
1.3.5 ladite chambre pilote (26.1, 26.2) est affectée audit élément de soupape principal (10.1, 10.2) d'une telle manière, que ledit élément de soupape principal (10.1, 10.2) soit exposée à la pression respective, qui règne dans la partie avant de ladite chambre d'entrée (17.1, 17.2) et la pression régnant dans ladite chambre pilote (26.1, 26.2) au moins dans une région partielle de ses aires (32.1, 32.2, 33.1, 33.2) dont chacune est orientée en un sens opposé au sens de l'autre, vue le long de la direction d'écoulement du milieu sous pression ;
1.3.6 ladite chambre pilote (26.1, 26.2) est reliée à ladite chambre d'entrée (17.1, 17.2) via au moins un passage de communication (27.1, 27.2), qui s'étend à travers ladite unité structurelle (13.1, 13.2);
1.3.7 la communication entre ledit soupape pilote (8.1, 8.2) et ladite chambre de sortie (18.1, 18.2) est établie via au moins un autre passage de communication (44.1, 44.2), qui s'étend à travers ladite unité structurelle (13.1, 13.2).
1.4 au moins trois connecteurs (23, 22, 24) couplés aux chambres (17.1, 17.2, 18.1, 18.2) dudit dispositif de soupape (2, 3), à ladite chambre d'entrée (17.1) dudit premier dispositif de soupape (2) étant apte à être couplée à une source de milieu sous pression, à ladite chambre de sortie (18.1) dudit premier dispositif de soupape (2) et ladite chambre d'entrée (17.2) dudit deuxième dispositif de soupape (3) étant apte à être couplé à au moins une charge, et à ladite chambre de sortie (18.2) dudit deuxième dispositif de soupape (3) étant constituée par une chambre de détente, qui est couplée à un espace de détente ;
1.5 dans lequel ladite chambre d'entrée (17.2) dudit deuxième dispositif de soupape (3) et ladite chambre de sortie (18.1) dudit premier dispositif de soupape (2) sont constituées par une chambre de travail (2, 3), qui est affectée auxdits deux dispositifs de soupape (2, 3) et qui est apte à être couplée à une ou plusieus charges via au moins un connecteur (22);
**caractérisé par** les caractéristiques suivantes:
1.6 la siège fixe (11.1, 11.2) de chaque soupape principale (9.1, 9.2) est formée par un insert (34.1, 34.2) apte à être serré dans le carter dudit dispositif de soupape (2, 3), à ladite chambre pilote (26.1, 26.2) étant formée par un espace existant entre ladite unité structurelle (13.1, 13.2) et ledit insert (34.1, 34.2), qui est défini par l'arrangement d'un moyen d'étanchéité entre ladite unité structurelle (13.1, 13.2) et ledit insert (34.1, 34.2) et la paroi intérieure dudit carter;
1.7 la cloison (29) est formée entre lesdits deux dispositifs de soupape (2, 3) par un insert respectif desdits inserts (34.1, 34.2) desdits deux dispositifs de soupape (2, 3).

2. Système combiné de soupapes (1) selon la revendication 1, **caractérisé en ce que** ladite unité structurelle (13.1, 13.2) de chaque dispositif de soupape (2, 3) est créée par la formation dudit élément de soupape principal (10.1, 10.2) et dudit élément de soupape pilote (12.1, 12.2) d'un corps de fermeture en une seule pièce (14.1, 14.2).

3. Système combiné de soupapes (1) selon la revendication 2, **caractérisé par** les caractéristiques suivantes:
3.1 ledit corps de fermeture (14.1, 14.2) comprend une première région terminale du type piston (15.1, 15.2) et une tige (1.1, 16.2) joignant ladite région;
3.2 ladite région terminale du type piston (15.1, 15.2) constitue ledit élément de soupape principal (10.1, 10.2);
3.3 ledit élément de soupape pilote (12.1, 12.2) est formé par ladite région terminale de ladite tige (16.1, 16.2), qui est orientée à partir de ladite région terminale du type piston (15.1, 15.2).

4. Système combiné de soupapes (1) selon une quelconque des revendications 1 à 3, **caractérisé en ce que** des moyens d'étanchéité sont disposés auxdites régions de surface, qui entrent en connexion opérative, dudit élément de soupape principal (10.1, 10.2) ou de ladite siège de soupape principale (11.1, 11.2) et/ou dudit élément de soupape pilote (12.1, 12.2) ou dudit corps pilote (7.1, 7.2).

5. Système combiné de soupapes (1) selon la revendication 4, **caractérisé en ce que** ledit premier moyen d'étanchéité (40.1, 40.2) renferme au moins un anneau en O.

6. Système combiné de soupapes (1) selon une quelconque des revendications 1 à 6, **caractérisé en ce que** ledit moyen de commande (4.1, 4.2) des dispositifs de soupape individuels (2, 3) comprend au moins un aimant de commande (5.1, 5.2) et une armature (6.1, 6.2) couplé audit aimant.

7. Système combiné de soupapes (1) selon la revendication 6, **caractérisé en ce que** ledit aimant de commande (5.1, 5.2) présente une caractéristique croissante levée/courant, ce qui signifie qu'il est tirant.

8. Système combiné de soupapes (1) selon la revendication 6, **caractérisé en ce que** ledit aimant de commande (5.1, 5.2) présente une caractéristique décroissante levée/courant, ce qui signifie qu'il est poussant

9. Système combiné de soupapes (1) selon une quelconque des revendications 6 à 8, **caractérisé en ce que** ledit aimant de commande (5.1, 5.2) est configuré sous forme d'un aimant proportionnel.

10. Système combiné de soupapes (1) selon une quelconque des revendications 6 à 9, **caractérisé en ce que** ledit aimant de commande (5.1, 5.2) est configuré sous forme d'un aimant cadencé.

11. Système combiné de soupapes (1) selon une quelconque des revendications 1 à 10, **caractérisé en ce qu'**un moyen d'étanchéité respectif est disposé entre lesdits inserts (34.1, 34.2) et les parois de carter (35).

12. Système combiné de soupapes (1) selon une quelconque des revendications 1 à 11, **caractérisé en ce que** ledit moyen de commande (4.1, 4.2) et lesdits corps de fermeture (14.1, 14.2) des deux moyens de soupape (2, 3) ont une structure identique et des dimensions identiques.

13. Système combiné de soupapes (1) selon une quelconque des revendications 1 à 12, **caractérisé en ce qu'**un moyen (30) à détecter la pression est disposé dans la chambre de travail (19).

14. Système combiné de soupapes (1) selon une quelconque des revendications 1 à 13, **caractérisé en ce qu'**il constitue une unité structurelle ensemble avec un dispositif de commande (42).
